# FASCICULE DE BREVET EUROPEEN

(11) **EP 2 024 297 B1**
(45) Date de publication et mention de la délivrance du brevet: **10.10.2018**
(21) Numéro de dépôt: 07729227.4
(22) Date de dépôt: 16.05.2007
(51) Int. Cl.: C04B 28/06, C04B 22/00

(54) **PROCÉDÉ D'ENROBAGE PAR CIMENTATION D'UNE SOLUTION AQUEUSE CONTENANT DU BORE ET COMPOSITION DE COULIS CIMENTAIRE**
VERFAHREN ZUR ZEMENTÄREN EINSCHLIESSUNG WÄSSRIGER BORLÖSUNGEN SOWIE ZEMENTÄRE SCHLÄMME
PROCESS FOR CEMENTITIOUS ENCAPSULATION OF AN AQUEOUS SOLUTION CONTAINING BORON AND CEMENTITIOUS GROUT

(30) Priorité: 18.05.2006 FR 0651823
(43) Date de publication de la demande: 18.02.2009
(73) Titulaire: Commissariat à l'Énergie Atomique et aux Énergies Alternatives, 75015 Paris (FR)
(72) Inventeur: CAU DIT COUMES, Céline, F-30126 Tavel (FR); MAUREL, Didier, F-30200 Saint Gervais (FR); CODINA, Maud, F-83136 Sainte Anastasie (FR)
(74) Mandataire: Ilgart, Jean-Christophe
(86) Numéro de dépôt international: PCT/EP2007/054779
(87) Numéro de publication internationale: WO 2007/135067

(56) Documents cités:
- EP-A1- 0 305 541
- EP-A1- 0 319 398
- WO-A-98/49115
- WO-A-2006/027554
- GB-A- 2 137 403
- MORI. T. ET AL: "Compositions for expansive cements" CHEMICAL ABSTRACTS + INDEXES, AMERICAN CHEMICAL SOCIETY. COLUMBUS, US, vol. 81, no. 8, 26 août 1974 (1974-08-26), page 230, XP000184222 ISSN: 0009-2258

## Description

### DOMAINE TECHNIQUE

L'invention a trait à un procédé d'enrobage par cimentation d'une solution aqueuse contenant du bore dans lequel on malaxe ladite solution aqueuse avec une composition à base de ciment.

L'invention concerne également la composition de coulis cimentaire ainsi obtenue.

La solution aqueuse contenant du bore qui peut être enrobée par cimentation avec une composition à base de ciment, selon la formulation de coulis de la présente invention, et par le procédé selon l'invention, est en particulier une solution aqueuse à concentration élevée en bore. Cette solution aqueuse peut notamment être constituée par des déchets aqueux contenant du bore issus de procédés industriels, par exemple il peut s'agir de déchets aqueux générés par l'industrie nucléaire tels qu'une solution aqueuse de purge issue de la purge du circuit primaire de refroidissement des réacteurs à eau pressurisée.

Précisons que le terme de « coulis » est un terme de génie civil désignant un mélange eau/ciment/sable avec une rhéologie favorable à l'écoulement. Le terme « enrobé » relève du vocabulaire utilisé pour la gestion des déchets. Il désigne un mélange déchet et éventuellement eau (si le déchet n'est pas une solution aqueuse)/ciment/sable, sans référence à la rhéologie après malaxage. Dans le contexte de l'invention, les termes « coulis » et « enrobé » sont généralement équivalents.

Le domaine technique de l'invention peut, de manière générale, être défini comme celui de l'enrobage, de l'inertage, des déchets liquides en particulier aqueux par conditionnement, inertage, enrobage dans une matrice à base de ciment. Plus particulièrement, selon l'invention, on s'intéresse au conditionnement, inertage, enrobage des déchets liquides aqueux contenant du bore en particulier des concentrations élevées de bore.

Le bore, introduit sous forme d'acide borique dans le circuit primaire de refroidissement des réacteurs à eau pressurisée, joue le rôle d'absorbeur de neutrons en complément des barres de commande.

Lorsque le circuit primaire est purgé, la solution boratée devient un déchet qui est traité par évaporation, après ajustement de son pH avec de la soude et mélange éventuel avec d'autres flux.

Les concentrats obtenus présentent en général une faible activité, qui est par exemple de 1 à 6.10¹⁰ Bq/m³, mais de fortes concentrations en bore, qui peuvent atteindre des valeurs aussi élevées que 30 à 40 g/L.

Ces concentrats sont conditionnés par cimentation afin de les convertir en une forme solide, stable, monolithique et confinante, constituant un colis satisfaisant aux normes de manutention et de stockage. Pour cela, ils sont malaxés avec un liant hydraulique, l'eau du déchet servant à hydrater le ciment, puis déversés dans un conteneur.

L'enrobage des déchets, quels qu'ils soient, est couramment réalisé à l'aide d'un liant qui est un ciment silico-calcique de type Portland, contenant éventuellement des ajouts tels que : laitier de haut fourneau, cendres volantes, pouzzolanes naturelles ou artificielles, fumée de silice, calcaire, etc....

Dans le cas des déchets boratés auxquels s'intéresse particulièrement l'invention, l'utilisation de tels liants se heurte cependant à un problème majeur : le bore contenu dans le déchet inhibe la prise du ciment [1, 2]. Il est à noter que le borax Na₂B₄O₇.10H₂O est d'ailleurs utilisé comme retardateur de prise des coulis d'injection destinés au chemisage des puits pétroliers parce qu'il est très efficace, même à haute température [3].

Les modes d'action communément évoqués pour expliquer le retard d'hydratation causé par le bore sont de deux types :
- *(i)* précipitation colmatante par formation d'un gel amorphe à la surface des grains de ciment, interdisant les échanges ioniques nécessaires à leur hydratation [1, 4, 5], ou
- *(ii)* chimisorption des ions borate à l'extrémité des chaînes de silicates de calcium hydratés (l'un des hydrates du ciment), ce qui bloquerait leur croissance [6].

Cet obstacle peut être partiellement levé en traitant le déchet à la chaux [7, 8]. C'est la solution de référence actuellement retenue pour des applications industrielles. La chaux est généralement ajoutée au déchet avec le ciment et le sable au moment du malaxage.

Le taux d'incorporation massique du concentrat est compris entre 18 et 20%. Le traitement à la chaux permet d'éviter l'inhibition totale de la prise par les borates, mais présente deux inconvénients.

Tout d'abord, les temps de prise restent longs, en général de l'ordre d'une semaine, et des dysfonctionnements sont parfois observés, car certains enrobés peuvent mettre plusieurs mois à durcir. Par ailleurs, le précipité boraté formé par ajout de chaux : CaO.B₂O₃.6H₂O est rapidement déstabilisé dans la matrice cimentaire. Le bore participe en effet à la formation différée de boroaluminates de calcium hydratés (phases de type AFₜ ou AFₘ) stables thermodynamiquement.

Deux alternatives ont été étudiées en remplacement de la formulation chaux/ciment Portland précédemment décrite :
(i) la réalisation d'une matrice d'enrobage par activation alcaline de cendres volantes [9]. La formulation proposée présente un taux d'incorporation massique du déchet élevé (36,67%), mais la concentration du bore dans le déchet (15 g/L) est deux fois plus faible que celle couramment rencontrée dans les concentrats d'évaporation provenant des centrales nucléaires à eau pressurisée, et le procédé d'enrobage comprend une étape dont la mise en oeuvre est coûteuse et qui consiste en un durcissement à 85°C pendant 24 heures.
(ii) l'utilisation d'un mélange de chaux, de ciment alumineux et éventuellement de ciment Portland visant à une précipitation directe des ions borate sous la forme de phases AFₜ ou AFₘ, stables en milieu cimentaire.

Les phases AFₜ et AFₘ ont respectivement pour formule générale [Ca₃(Al, Fe) (OH)₆.12H₂O].X₃.nH₂O et [Ca₂(Al, Fe) (OH)₆].X.nH₂O, où X désigne un anion monovalent, ou un demi-anion divalent. L'existence de minéraux incorporant du bore sous forme B(OH)₄⁻ (AFₜ) ou HBO₃²⁻ (AFₘ) a été montrée en 1986 par Wenda et Kuzel [10]. Poellman *et al.* [11] ont généralisé ces résultats en montrant l'existence de solutions solides entre des phases sulfatées et boratées.

Une première formulation d'enrobage a été proposée par Roux [1]. Le concentrat boraté dont la concentration [B] est de 35 g/L est malaxé avec un mélange de ciment Portland, de ciment alumineux de type Fondu, de chaux et de sable. Le taux d'incorporation massique du déchet est fixé à 21%. L'enrobé obtenu présente des propriétés intéressantes : il s'agit d'un matériau auto-lissant, dont le temps de prise est de 45 h, et la résistance à la compression après 90 j de cure sous eau est comprise entre 48 et 57 MPa. Le nombre élevé des constituants de la formulation complique cependant la constitution du liant d'enrobage.

En 2001, Goni et al. [12] ont testé la faisabilité de l'enrobage d'un déchet possédant une concentration en bore de 45 g/L à l'aide d'un mélange de ciment alumineux et de chaux. Le taux d'incorporation massique du déchet est fixé à 42%. Le matériau prend en moins de 7 jours et assure un meilleur confinement du bore, avec un coefficient de diffusion effectif Dₑ d'environ 10⁻⁹ cm²/s, qu'un témoin préparé à partir de ciment Portland et de chaux dont le coefficient de diffusion effectif Dₑ est d'environ 10⁻⁸ cm²/. Cependant, les performances mécaniques du matériau obtenu pourraient se révéler insuffisantes compte tenu du fort dosage en eau de la formulation (E/C = 0,95) et de la possible conversion à long terme des phases aluminates formées dans les premiers stades de l'hydratation. Par ailleurs, l'absence de sable dans la formulation présage de fortes variations dimensionnelles du matériau au cours du temps.

Le document WO-A-2006/027544 décrit un procédé d'encapsulation de matériaux par traitement à l'aide d'une composition cimentaire. Les matériaux à encapsuler sont, par exemple, des déchets et des résines échangeuses d'ions, mais aussi des métaux. Ces déchets sont notamment des déchets produits dans l'industrie nucléaire. Le traitement de solutions aqueuses contenant du bore n'est ni mentionné, ni évoqué. Ce document ne concerne pas le conditionnement de déchets boratés.

Le document WO-A-98/49115 décrit un matériau de remblayage, remplissage qui comprend des résidus d'extraction minière, des sables, des déchets solides éventuels, et un matériau liant qui peut être choisi parmi les clinkers de ciments sulfo-alumineux.

Le traitement de solutions aqueuses contenant du bore n'est ni mentionné, ni évoqué dans ce document.

Le document EP-A1-0 319 398 décrit une procédé d'enrobage par cimentation de déchets radioactifs contenant du bore sous forme de concentrâts liquides boratés dans lequel on malaxe des déchets avec un ciment alumineux, un ciment Portland et un composé siliceux. Ce document ne décrit ni ne suggère la mise en oeuvre d'un ciment sulfo-alumineux et stipule au contraire que la teneur en sulfates ne doit pas dépasser 2,6 %.

Il existe donc au vu de ce qui précède un besoin pour un procédé d'enrobage par cimentation d'une solution aqueuse contenant du bore, mettant en oeuvre une formulation cimentaire, et pour une formulation de coulis cimentaire obtenue par malaxage de ladite solution aqueuse contenant du bore avec ladite formulation à base de ciment, ce procédé et/ou cette formulation de coulis étant notamment :
- simples, fiables, et n'engendrant pas de coûts d'application excessifs ;
- n'impliquant pas de traitement à la chaux ;
- permettant l'enrobage de solutions aqueuses à fortes concentrations de bore, supérieures ou égales par exemple à 35 g/l, telles que les concentrats d'évaporation produits par les stations de traitement des effluents de réacteurs nucléaires à eau pressurisée ;
- permettant l'enrobage de toutes sortes de solutions contenant du bore, quelle que soit leur provenance ;
- ne nécessitant pas d'apport d'eau additionnel, le ciment étant hydraté par l'eau fournie par la solution telle qu'un déchet ;
- autorisant un taux d'incorporation massique de la solution telle qu'un déchet supérieur à 20%, qui est le taux d' incorporation d'une formulation de référence avec un traitement à la chaux de la solution telle qu'un déchet ;
- répondant aux contraintes de mise en oeuvre industrielle en matière de viscosité et de temps de prise. En particulier, la composition de coulis cimentaire selon l'invention doit précisément posséder une viscosité permettant une vidange aisée du malaxeur et limitant le volume d'eau de rinçage ; le temps de prise doit être supérieur à 5 heures pour écarter tout risque de prise dans le malaxeur en cas d'incident de fonctionnement, et inférieur à une semaine qui est le temps de prise de formulation de référence avec traitement à la chaux du déchet ;
- permettant d'assurer un confinement du bore.

En outre, dans le cas où la solution traitée est une solution radioactive telle qu'un déchet radioactif, le déchet enrobé, après enrobage avec la composition à base de ciment mise en oeuvre dans le procédé selon l'invention, et selon / la formulation de coulis cimentaire selon l'invention doit aussi vérifier les critères d'acceptation dans un site de stockage de surface pour les déchets de faible activité [13, 14].

En France, ces critères d'acceptation sont les suivants :
- absence d' eau exsudée non reprise à 24 heures ;
- résistance à la compression supérieure à 8 MPa après 90 jours de cure à 20°C sous air, sous eau ou en sac étanche.

Le but de la présente invention est de fournir un coulis cimentaire, et un procédé d'enrobage par cimentation d'une solution aqueuse contenant du bore qui répondent aux besoins, contraintes, exigences et critères énumérés ci-dessus.

Le but de la présente invention est encore de fournir une composition de coulis cimentaire et un procédé d'enrobage par cimentation d'une solution aqueuse contenant du bore qui ne présentent pas les inconvénients, défauts, limitations et désavantages des compositions et procédés de l'art antérieur et qui résolvent les problèmes des compositions et procédés de l'art antérieur.

Le but de la présente invention est, en outre, d'accélérer la prise du coulis cimentaire ou enrobé contenant le bore, par rapport aux formulations traditionnelles tout en conservant toutes les propriétés avantageuses du matériau et en particulier les propriétés du matériau qui permettent sa mise en oeuvre industrielle et son acceptation ultérieure sur un site de stockage.

Ce but, et d'autres encore, sont atteints conformément à l'invention par un procédé tel que décrit dans le Revendication 1.

Un tel procédé n'a jamais été décrit, ni suggéré dans l'art antérieur.

L'invention concerne enfin une composition de coulis cimentaire préparée par malaxage de la solution aqueuse contenant du bore qui est la solution à conditionner avec ladite composition à base de ciment décrite plus haut.

Une telle composition de coulis cimentaire n'a également jamais été décrite, ni suggérée dans l'art antérieur.

Les termes "coulis cimentaire" sont des termes dont la signification est sans ambiguïté pour l'homme du métier dans le domaine du ciment et qui sont couramment utilisés dans ce domaine de la technique.

La composition de coulis cimentaire, et le procédé selon l'invention répondent aux besoins, contraintes, exigences et critères énumérés plus haut, permettent de surmonter les inconvénients, défauts, limitations et désavantages des compositions et procédés de l'art antérieur et apportent une solution aux problèmes des compositions et procédés de l'art antérieur.

Cela est démontré dans les exemples ci-dessous.

En particulier, l'enrobé, que l'on peut aussi appelé coulis cimentaire c'est-à-dire le mélange obtenu suite au malaxage de la solution contenant du bore avec la composition à base de ciment mise en oeuvre selon l'invention (sable, ciment et éventuellement gypse) a généralement un taux d'incorporation massique en bore de 21,8 à 30,5%, ce qui est supérieur d'un facteur de 1,1 à 1,5 aux taux d'incorporation des enrobés élaborés selon les formulations de l'art antérieur avec traitement à la chaux. Le temps de prise de l'enrobé (évalué par le temps pour lequel l'échauffement engendré par les réactions d'hydratation du ciment est maximal en calorimétrie semi-adiabatique de Langavant) est généralement de 26 à 111 heures, et le plus souvent inférieur à 80 h, ce qui présente une accélération de la prise généralement d'un facteur de 1,6 à 8,1 par rapport aux enrobés préparés selon les formulations de l'art antérieur avec traitement à la chaux du déchet contenant du bore.

En outre, de manière étonnante, cet accroissement important de la masse de solution, déchet, incorporée qui va de pair avec une accélération très importante de la prise ne dégrade pas les autres propriétés de l'enrobé en matière notamment de fluidité, de ressuage, d'échauffement, et de résistance mécanique.

Ainsi, on peut noter une absence de ressuage à 24 heures, un échauffement inférieur à 60°C lors de la prise, une fluidité qui est celle d'un coulis (définie généralement par un temps d'écoulement gravitaire d'un litre de matériau à travers un cône de Marsh d'ajutage 12,5 mm de moins de 90 s) sans ajout d'adjuvants organiques, une résistance mécanique à la compression (après prise) excédant la limite des 8 MPa dès 28 jours, et aussi après 90 jours de conservation à température ambiante sous eau, en sac étanche ou sous air.

Les matériaux enrobés selon l'invention permettent d'obtenir une très faible expansion, qui est une propriété recherchée et souhaitable, et même dans certains cas, un retrait. En d'autres termes, les matériaux selon l'invention ne sont pas des matériaux expansifs. Ainsi, on peut noter que l'enrobé selon l'invention, du fait notamment de la nature du ciment, mis en oeuvre, présente un retrait et une expansion lorsqu'il est conservé sous air (voir formulation II, exemple 1).

De même, les matériaux enrobés selon l'invention ont une très faible expansion sous eau (voir formulation II de l'exemple 1).

La composition à base de ciment mise en oeuvre dans le procédé selon l'invention, qui est destinée à l'enrobage de solutions aqueuses contenant du bore, comprend un mélange spécifique, adapté, de sable et de ciment sulfoalumineux.

Selon l'invention, la composition de coulis cimentaire comprend de même un mélange spécifique, adapté, de sable, de ciment sulfoalumineux, et de solution contenant du bore.

Sans vouloir être lié par aucune théorie, le ciment sulfoalumineux forme par hydratation de l'ettringite (phase AFₜ sulfatée) et/ou du monosulfoaluminate de calcium hydraté (phase AFₘ sulfatée) capables d'incorporer dans leur structure le bore apporté par la solution aqueuse tel qu'un déchet.

Les possibilités de substitution ionique offertes par les hydrates d'un ciment sulfoalumineux ont déjà été mises à profit pour inerter des déchets riches en métaux lourds [15, 16] ou des déchets industriels ultimes pulvérulents tels que résidus d'incinération et de métallurgie [17].

Mais il s'agit là de déchets très différents des déchets contenant du bore que l'on traite selon l'invention. Les problèmes qui se présentent avec ce type de déchets sont également fondamentalement différents des problèmes posés par les déchets contenant du bore. Les compositions décrites dans ces documents ne mentionnent ni sable ni gypse.

De manière étonnante, selon la présente invention on montre qu'un ciment sulfoalumineux, comprenant éventuellement de 0 à 30% de gypse, peut être utilisé seul, à savoir notamment sans qu'on lui ajoute du ciment Portland ou autre, combiné à du sable, pour l'enrobage de solutions aqueuses, par exemple de déchets aqueux, contenant des concentrations en bore très élevées, supérieures en tout cas à celles traitées par les compositions de ciment et avec les procédés de l'art antérieur (par exemple supérieure ou égale à 35 g/L.), à condition d'ajuster si nécessaire le pH du déchet à une valeur supérieure ou égale à 11, et de préférence comprise entre 11 et 12.

Le document [18] décrit un liant sulfaté dont la composition diffère de celle du ciment entrant dans la formulation mise en oeuvre dans le procédé de l'invention (absence de gypse, absence de sable, pas d'incorporation de solution boratée) et dont la fonction première est d'améliorer la résistance mécanique à la compression de liants traditionnels comme le plâtre.

En d'autres termes, le procédé selon l'invention qui met en oeuvre une composition, a base de ciment spécifique et la composition du coulis obtenu sont différents des compositions et procédés de l'art antérieur notamment du fait du type de ciment mis en oeuvre, de son association avec du sable, et du type de solutions, de déchets aqueux traités.

En outre, le but recherché par les compositions et procédés de l'art antérieur à savoir réduire la fraction soluble du déchet, est très différent du but principal recherché et atteint dans la présente invention, qui est avant tout d'accélérer la prise de l'enrobé et d' accroître le taux d'incorporation de la solution par rapport aux formulations traditionnelles, tout en conservant des propriétés du matériau permettant sa mise en oeuvre industrielle et son acceptation ultérieure sur un site de stockage.

En d'autres termes, selon l'invention, on résout notamment le problème de retard de prise du ciment engendré par le bore et il est possible, par rapport à un enrobage traditionnel, d'accroître significativement le taux d'incorporation d'un déchet boraté, tout en réduisant le temps de prise du matériau obtenu et en garantissant de bonnes propriétés après durcissement.

De manière plus détaillée, la composition à base de ciment mise en oeuvre dans le procédé selon l'invention comprend un ciment sulfoalumineux. La distinction entre un ciment sulfoalumineux et un sulfoaluminate de calcium doit être rappelée : un ciment sulfoalumineux contient une phase de type sulfoaluminate de calcium (la yeelimite : 4CaO. 3Al₂O₃. SO₃ ou C₄A₃S), qui est généralement la phase majoritaire du clinker, mais ce ciment contient également d'autres phases, comme le sulfate dicalcique, la pérovskite, l'anhydrite, et des aluminates de calcium.

Un tel ciment sulfoalumineux pourra par exemple être constitué d'un clinker avec la composition minéralogique suivante (en masse) : C₄A₃S : 72,8% ; C₂S : 13,4% ; C₃FT : 8,0% ; C₁₂A₇ : 3,1% ; MgO : 1,7% ; CS : 0,7% selon la notation cimentière usuelle (C = CaO, S = SiO₂, S (souligné) = SO₃, A = Al₂O₃, F = Fe₂O₃, T = TiO₂).

Avantageusement, le ciment peut contenir jusqu' à 30% en poids de gypse (0 à 30%), de préférence de 5 à 20% de gypse, par exemple 10 à 15 % de gypse. Le gypse, qui favorise la formation de la phase AFₜ au détriment de la phase AFₘ est un facteur d'ajustement important des propriétés de l'enrobé.

La proportion de gypse est un paramètre important. En effet, dans le cas du conditionnement de solutions boratées, les inventeurs ont mis en évidence que, de manière surprenante, un dosage en gypse supérieur à 30 % conduisait à la fissuration du matériau après durcissement.

La composition à base de ciment mise en oeuvre selon l'invention, et la composition de coulis cimentaire selon l'invention comprennent un sable qui est de préférence un sable non alcali-réactif qui est par exemple un sable siliceux de Fontainebleau. Le sable a de préférence une granulométrie de 0 à 1 mm, de préférence encore de 0 à 350 µm pour assurer une fluidité élevée de l'enrobé après malaxage.

Les compositions selon l'invention ne comprennent pas de chaux. Cet élément est en effet volontairement omis des compositions selon l'invention car sa présence engendrerait une expansion pathologique des matériaux.

Plus précisément, dans le procédé d'enrobage par cimentation d'une solution aqueuse contenant du bore, on réalise les étapes successives suivantes :
- on malaxe la composition à base de ciment décrite ci-dessus avec la solution aqueuse contenant du bore pour obtenir un coulis cimentaire constituant un enrobé ;
- on coule ledit enrobé dans un conteneur ;
- on laisse s'effectuer la prise dudit enrobé dans le conteneur ;
- on procède à la fermeture du conteneur.

Plus précisément, après avoir coulé ledit enrobé dans un conteneur, le conteneur est évacué vers une salle de maturation dans laquelle a lieu la prise de l'enrobé et la fermeture du conteneur.

Pour cent parties de ciment, (ledit ciment comprenant éventuellement une certaine quantité de gypse), la proportion de solution aqueuse contenant du bore est de 60 à 70 parties, et celle de sable est de 50 à 125 parties. Cette proportion correspond généralement approximativement à la teneur en eau au sein du matériau élaboré, qui est donc généralement d'environ 60 à 70 parties.

Dans ces conditions, le taux d'incorporation massique du déchet dans l'enrobé est généralement de 21,8% à 30,5% et les spécifications attendues pour l'enrobé (fluidité, prise, ressuage, résistance mécanique) sont vérifiées.

La solution aqueuse traitée par le procédé de l'invention et entrant dans la composition du coulis cimentaire selon l'invention contient de 10 à 50 g/l de bore, de préférence de 20 à 40 g/l de bore.

Le procédé selon l'invention et la formulation de coulis cimentaire selon l'invention permettent de traiter des solutions présentant des concentrations élevées en bore par exemple supérieure ou égale à 35 g/l, par exemple de 35 à 50 g/l.

Le bore peut être présent sous la forme d'acide borique, et/ou d'ions borate et/ou d'ions polyboriques.

La solution aqueuse contenant du bore peut être quelconque, il peut s'agir par exemple d'un rejet, déchet, aqueux liquide provenant d'un procédé, d'une installation industrielle, d'une vidange, d'une purge d'un réacteur ou réservoir, d'une opération de lavage, nettoyage, etc....

Cette solution peut être une solution radioactive, notamment de faible activité.

Le procédé et la formulation de coulis cimentaire selon l'invention permettent notamment de traiter les solutions aqueuses issues de la purge du circuit primaire de refroidissement d'un réacteur à eau pressurisée.

Préalablement au malaxage, le pH de la solution aqueuse contenant du bore (aussi appelée "solution boratée") doit généralement être ajusté à une valeur supérieure ou égale à 11, de préférence comprise entre 11 et 12, de préférence encore de 11,2 à 11,9, mieux de 11,5 à 11,75, encore mieux de plus de 11,5 à 11,75.

Des valeurs préférées du pH sont, par exemple, de 11,2 ; 11,5 ; 11,75 ; 11,9.

Le pH du déchet joue en effet un rôle très important sur le temps de prise de l'enrobé.

Par contre, il est à noter qu'il n'y a pas généralement, selon l'invention, d'exigence sur le pH de la composition cimentaire.

Il a pu être mis en évidence que dans la plage de pH, généralement préconisée selon l'invention (par exemple, de 11,2 à 11,9), la chaleur d'hydratation du ciment préparé avec une solution boratée, est analogue à celle d'un ciment témoin préparé avec de l'eau pure, ce qui montre que l'inhibition de l'hydratation est supprimée dans cette plage de pH spécifique selon l'invention, tandis que cette inhibition de l'hydratation existe pour des pH se situant en dehors de la plage, généralement préconisée selon l'invention, par exemple, pour un pH de 10,6.

Le pH peut être ajusté par exemple par addition de soude à la solution aqueuse contenant du bore.

La solution aqueuse contenant du bore est généralement malaxée à une température de 10°C à 80°C, de préférence de 20 à 60°C. Une température de 60°C avant la cimentation permet d'éviter tout risque de recristallisation des sels dans la cuve de stockage en amont du malaxage.

Mais le procédé et la formulation de coulis cimentaire selon l'invention permettent également de réaliser le conditionnement, l'enrobage à température ambiante généralement de 10 à 30°C, de préférence de 15 à 25°C, par exemple de 18°C.

On procède généralement au malaxage préalable ou prémalaxage des constituants pulvérulents (ciment, sable, gypse) et l'on malaxe ensuite ces constituants prémélangés avec la solution, mais tout autre mode de mélange et ordre de mélange du ciment, sable, solution peuvent être envisagés.

Le malaxage peut être effectué dans tout appareil de malaxage connu par exemple un malaxeur de type Guedu à pale rotative en fond de cuve.

La prise se déroule généralement en une durée inférieure à une semaine, de préférence de 26 à 111 heures, ce qui est on l'a déjà vu nettement inférieur aux temps de prise de l'art antérieur. Par ailleurs, il est préférable, souhaitable, que le temps de prise soit supérieur à 6 heures, notamment dans le cas du conditionnement de déchets nucléaires, pour écarter tout risque de prise de l'enrobé dans le malaxeur, en cas de dysfonctionnement. Ce critère est notamment vérifié dans la plage préférée de 26 à 111 heures, mentionnée ci-dessus.

Cette prise s'accompagne d'un faible échauffement généralement inférieur à 60°C.

L'invention va maintenant être décrite en référence aux exemples suivants, donnés à titre illustratif et non limitatif en relation avec le dessin joint dans lequel :

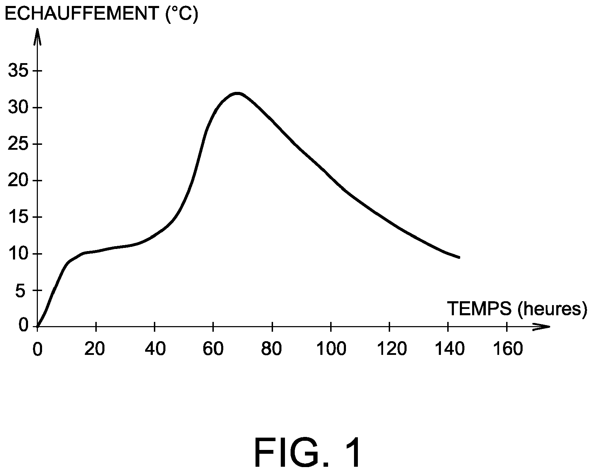

- la figure 1 est un graphique qui donne l'échauffement (°C) en fonction du temps (heures) du coeur d'un enrobé préparé selon la formulation VI à partir d'un déchet à 18°C et placé dans un calorimètre semi-adiabatique de Langavant.

### Exemples

### Exemple 1 : Formulation d'enrobage à taux d'incorporation élevé du déchet.

Le déchet considéré est constitué d'une solution aqueuse composée, pour un volume d'un litre, de 200 g d'acide borique H₃BO₃ et de 46 g de soude NaOH. Il est cimenté selon deux stratégies :
- traitement à la chaux du déchet et enrobage avec un ciment Portland selon une formulation actuellement employée dans les ateliers de conditionnement (formulation I),
- enrobage avec un ciment sulfoalumineux selon la présente invention (formulation II).

Les compositions minéralogiques des deux ciments utilisés sont récapitulées dans le Tableau 1.

**Tableau 1 : Composition minéralogique des ciments utilisés**

| | Ciment Portland | Ciment sulfoalumineux |
|---|---|---|
| Composition minéralogique du clinker | | C₄A₃S : 72,8 % |
| | C₃S : 65,6 % | C₂S : 13,4 % |
| | C₂S : 16,0 % | C₃FT : 8,0% |
| | C₃A : 4,04 % | C₁₂A₇ : 3,1 % |
| | C₄AF : 5.6 % | MgO 1,7 % |
| | | CS : 0,7 % |
| Taux de gypsage du liant | 3,5 % | 19,7 % |

Dans ce tableau, on utilise la notation cimentaire classique, à savoir :
- C = CaO ;
- S = SiO₂ ;
- S (**souligné**) = SO₃ ;
- A = Al₂O₃ ;
- F = Fe₂O₃ ;
- T = TiO₂.

Pour se rapprocher des conditions de mise en oeuvre dans les ateliers de conditionnement, le déchet est porté à 60°C. Son pH, dans le cas de l'enrobage avec un ciment sulfoalumineux, est ajusté à 11,5 par ajout, pour un volume de 1 L, de 83,5 g de soude NaOH. Le déchet est ensuite malaxé avec les pulvérulents pré-mélangés selon les formulations décrites dans le Tableau 2. Le sable utilisé est un sable siliceux de Fontainebleau de granulométrie 0 - 350 *µ*m.

**Tableau 2 : Formulations d'enrobage (pour 100 g de ciment) et propriétés des matériaux obtenus**

| | Formulation I | Formulation II |
|---|---|---|
| Composition de l'enrobé | Ciment Portland 100 g | |
| | Sable 75 g | Ciment sulfoalumineux 100 g |
| | Chaux 6 g | Sable 50 g |
| | Déchet 40 g | Déchet 65 g |
| Taux d'incorporation massique du déchet | 18 % | 30,2 % |
| Temps d'écoulement au cône de Marsh (ajutage 12,5 mm) | - | 39 s |
| Ressuage | 1 h:0% | 1 h : 0% |
| | 3 h : 0% | 3 h : 0% |
| | 24 h : 0% | 24 h : 0% |
| Prise thermique | 185 h | 57 h |
| Echauffement maximal | 37 °C | 55°C |
| Résistance à la compression | 90 j - eau : 72 MPa | 28 j - eau : 53 MPa |
| | 90 j - sac : 63 MPa | 28 j - sac : 48 MPa |
| | 90 j - air : 70 MPa | 28 j - air : 44 MPa |
| Variations dimensionnelles | 28 j - eau : + 344 µm/m | 28 j - eau : + 780 µm/m |
| | 28 j - sac : -500 µm/m | 28 j - sac : + 44 µm |
| | 28 j - air : - 993 µm/m | 28 j air : - 275 µm/m |

Les enrobés obtenus font l'objet d'une série de caractérisations (Tableau 2) :
- évaluation de la fluidité par mesure du temps d'écoulement d'un litre d'enrobé à travers un cône de Marsh muni d'un ajutage 12,5 mm ;
- mesure du ressuage à 1 h, 3 h et 24 h sur 100 mL d'enrobé selon la norme NF P 18-507 ;
- évaluation du temps de prise par mesure du temps pour lequel l'échauffement de 1575 g d'enrobé placé dans un calorimètre semi-adiabatique de Langavant tel défini par la norme NF P 15-436 est maximal ;
- mesure de la résistance en compression sur des éprouvettes 4x4x16 cm conservées à température ambiante sous eau, en sac ou sous air selon la norme EN 196-1 ;
- mesure de la variation longitudinale d'éprouvettes 4x4x16 cm conservées à température ambiante sous eau, en sac ou sous air.

La mesure de la « prise thermique » a été préférée à la mesure de la prise Vicat car cette dernière est très imprécise dans le cas de matériaux à prise lente.

Il apparaît que, par rapport à la formulation I de référence, la présente invention permet d'accroître le taux d'incorporation massique du déchet dans l'enrobé par un facteur de 1,67 tout en accélérant la prise du matériau par un facteur 3,2. Sur la durée de l'étude, le matériau obtenu présente des caractéristiques favorables :
- absence de ressuage,
- échauffement inférieur à 60°C,
- fluidité de type coulis sans ajout d'adjuvants organiques,
- résistance mécanique excédant largement la borne de 8 MPa dès l'échéance de 28 j,
- variations dimensionnelles modérées, avec un retrait compensé en sac étanche.

L'enrobé selon l'invention (formulation II) présente un retrait lorsqu'il est conservé sous air, qui est, par exemple, de 0,028 %, après 28 jours de cure sous air, ce qui est très faible.

### Exemple 2 : Formulations à prise rapide

Le déchet considéré est constitué d'une solution aqueuse composée, pour un volume d'un litre, de 200 g d'acide borique H₃BO₃ et de 46 g de soude NaOH. Il est cimenté selon trois variantes de la présente invention.

Pour se rapprocher des conditions de mise en oeuvre dans les ateliers de conditionnement, le déchet est porté à 60°C. Après ajustement du pH, le déchet est malaxé avec les pulvérulents pré-mélangés selon les formulations décrites dans le Tableau 3. Le sable utilisé est un sable siliceux de Fontainebleau de granulométrie 0 - 350 *µ*m.

**Tableau 3 : Formulations d'enrobage et propriétés des matériaux obtenus**

| | Formulation III | Formulation IV | Formulation V |
|---|---|---|---|
| Valeur d'ajustement du pH | 12 | 11.75 | 11.75 |
| Masse de soude ajoutée (pour 1 L de déchet) | 94,1 g | 87,7 g | 87,7 g |
| Gypsage du ciment sulfoalumineux | 15 % | 8 % | 17,3 % |
| Formulation d'enrobage | Ciment 100 g | Ciment 100 g | Ciment 100 g |
| | Sable 87,5 g | Sable 87,5 g | Sable 125 g |
| | Déchet 65 g | Déchet 65 g | Déchet 65 g |
| Taux d'incorporation massique du déchet | 25,7% | 25,7 % | 22,4 % |
| Temps d'écoulement au cône de Marsh (ajutage 12,5 mm) | 34 s | 25 s | 80 s |
| Ressuage | 1 h : 0% | 1 h : 0% | 1 h : 0% |
| | 3 h : 0% | 3 h : 0% | 3 h : 0% |
| | 24 h : 0% | 24 h : 0% | 24 h : 0% |
| Prise thermique | 26 h | 35 h | 44 h |
| Echauffement maximal | 47,5°C | 56,2°C | 47,3°C |
| Résistance à la compression | 28 j - eau : 51 MPa | 28 j - eau : 38 MPa | 28 j - eau : 62 MPa |
| | 28 j - sac : 47 MPa | 28 j - sac : 36 MPa | 28 j - sac: 64 MPa |
| | 28 j - air : 44 MPa | 28 j - air : 32 MPa | 28 j - air: 46 MPa |

Les enrobés obtenus font l'objet de caractérisations selon des protocoles analogues à ceux présentés dans l'exemple 1. Il apparaît que, sur la durée de l'étude, les variantes de la présente invention permettent une réduction du temps de prise des enrobés d'un facteur 4 à 7 par rapport à la formulation de référence I, sans dégradation inacceptable de leurs propriétés ni réduction du taux d'incorporation du déchet.

### Exemple 3 : Enrobage d'un déchet à 18°C

Le déchet considéré est constitué d'une solution aqueuse composée, pour un volume d'un litre, de 200 g d'acide borique H₃BO₃ et de 130,4 g de soude NaOH. Sa température est de 18°C au moment de l'enrobage.

L'enrobé est préparé selon la formulation VI par malaxage du déchet avec un mélange de ciment sulfoalumineux dont le taux de gypse est de 10,3 % et de sable siliceux de granulométrie 0 - 350 *µ*m.

| | |
|---|---|
| Formulation VI : | Ciment sulfoalumineux : 100 g |
| | Sable : 150 g |
| | Déchet : 65 g |

Le déroulement de l'hydratation du ciment est suivi par mesure de l'échauffement au coeur d'une masse de 1575 g d'enrobé placé dans un calorimètre de Langavant tel que défini dans la norme NF P 15-436. L'enregistrement obtenu est présenté sur la figure 1.

L'observation d'un pic de température à l'échéance de 67 h atteste du déroulement de l'hydratation. Cet exemple illustre donc la possibilité offerte par la présente invention de conditionner des déchets non préalablement chauffés.

### Exemple 4 : Capacité du ciment sulfoalumineux à confiner le bore

Afin d'évaluer la capacité du ciment sulfoalumineux à confiner le bore, des pâtes sont préparées par mélange de 100 g de ciment et de 45 g d'une solution aqueuse contenant 9 g d'acide borique et 6,5 g de soude NaOH. Le taux de gypse du ciment sulfoalumineux est de 0, 10, 20 ou 30%. La température du déchet est de 20°C. Les matériaux obtenus sont conservés en sac étanche. Aux échéances 1 et 28 jours, des échantillons, broyés si nécessaire, sont placés en suspension dans de l'eau ultrapure avec un rapport (Volume d'eau/Masse de solide) égal à 9 mL/g. La quantité de bore relâchée en solution est analysée après 24 heures d'agitation. Les résultats obtenus sont récapitulés dans le Tableau 4.

**Tableau 4 : Fraction de bore lixiviée des pâtes de ciment sulfoalumineux**

| Age de l'échantillon | Ciment à 0% de gypse | Ciment à 10% de gypse | Ciment à 20% de gypse | Ciment à 30% de gypse |
|---|---|---|---|---|
| 1 j | 4,9 | 4,1 | 3,2 | 4,0 |
| 28 j | 3,1 | 1,3 | 1,3 | 1,8 |

Il apparaît que dès les premiers stades de l'hydratation, une fraction importante du bore est insérée dans la structure solide des matériaux et qu'elle est faiblement labile : la fraction de bore lixiviée à partir d'échantillons âgés de 1 jour est inférieure à 5%. Par ailleurs, les liants comportant 10 ou 20% de gypse présentent les meilleures performances de confinement du bore à l'échéance de 28 j : 98,7% du bore initialement présent dans la solution de gâchage est insolubilisé.

Cet exemple illustre la capacité du ciment sulfoalumineux utilisé dans la présente invention à confiner le bore.

### Exemple 5 : Enrobage d'un déchet avec une concentration extrême en bore ([B] = 50 g/L)

Le déchet considéré est constitué d'une solution aqueuse composée, pour un volume d'un litre, de 286,11 g d'acide borique H₃BO₃ et de 194 g de soude NaOH. Son pH à 60°C est de 12.

Pour se rapprocher des conditions de mise en oeuvre dans les ateliers de conditionnement, le déchet est porté à 60°C. Le déchet est malaxé avec les pulvérulents pré-mélangés selon la formulation III précédemment décrite dans l'exemple 2. Le sable utilisé est un sable siliceux de Fontainebleau de granulométrie 0-350 *µ*m.

L'enrobé obtenu fait l'objet de caractérisations selon des protocoles analogues à ceux présentés dans l'exemple 1 (Tableau 5).

**Tableau 5**

| | Formulation III | |
|---|---|---|
| pH du déchet (60°C | 12 | |
| Gypsage du ciment sulfoalumineux | 15% | |
| Formulation d'enrobage | Ciment | 100 g |
| | Sable | 87,5 g |
| | Déchet | 65 g |
| Taux d'incorporation massique du déchet | 25,7% | |
| Temps d'écoulement au cône de Marsh (ajutage 12,5 mm) | 77 s | |
| Ressuage | 1 h : 0% | |
| | 3 h : 0% | |
| | 24 h : 0% | |
| Prise thermique | 37,8 h | |
| Echauffement maximal | 46°C | |
| Résistance à la compression | 28 j - eau : 35 MPa | |
| | 28j - sac : 32 MPa | |
| | 28 j - air : 31 MPa | |

Sur la durée de l'étude, le matériau possède des caractéristiques favorables (Tableau 5) : prise en moins de 40 h malgré la concentration extrême en retardateur de prise, taux d'incorporation massique (25,7%) supérieur à ceux des formulations avec traitement à la chaux selon l'état de l'art antérieur (18-20%), écoulement au cône de Marsh en moins de 90 s, absence de ressuage, échauffement modéré pendant l'hydradation, résistance à la compression à 28 j largement supérieure à la borne minimale requise de 8 MPa.

Cet exemple illustre donc qu'avec la composition à base de ciment décrite dans la présente invention, il est possible de conditionner des déchets à teneur extrême en bore ([B] = 50 g/L).

### Exemple 6 : Influence du pH sur le temps de prise du matériau d'enrobage d'un déchet boraté

- La concentration en bore est de 35 g/l dans la solution de gachâge.
- Les rapports massiques eau/ciment et sable/ciment sont respectivement de 0,5 et 3.
- Le ciment sulfoalumineux utilisé comporte 20 % de gypse.

**Tableau 6 : Influence du pH sur le temps de prise du matériau d'enrobage du déchet boraté (Exemple 6)**

| pH | Chaleur d'hydratation (J/g de liant) |
|---|---|
| 8,2 | - |
| 9,4 | 54 |
| 10,6 | 100 |
| 11,2 | 297 |
| 11,9 | 290 |
| Témoin gâché à l'eau pure | 300 |

Le tableau 1 montre que l'utilisation de la formulation décrite dans le document WO-A-2006/027554 ne serait pas adaptée pour conditionner une solution boratée. A pH 10,6, dans la zone optimale identifiée dans ce document, nos essais montrent que la chaleur d'hydratation du ciment ne représente que le tiers de celle d'un témoin gâché avec de l'eau pure (300 J/g), ce qui atteste d'une inhibition de l'hydratation du ciment. En revanche, pour un pH de 11,2 ou 11,9, tel que généralement préconisé selon l'invention, la chaleur d'hydratation du ciment est comparable à celle du témoin, ce qui montre que l'inhibition de l'hydratation a été supprimée.

### REFERENCES

[1] C. Roux, « Conditionnement par des Liants Hydrauliques de Concentrats Boratés Radioactifs », Thèse de Doctorat de l'Université Paris Sud-Orsay (1989)
[2] V.S. Ramachandran, M.S. Lowery, « Conduction Calorimetric Investigation of the Effect of Retarders on the Hydration of Portland Cement », Thermochimica Acta 195 (1992) 373-387
[3] J. Bensted, I.C. Callaghan, A. Lepre, « Comparative Study of the Efficiency of Various Borate Compounds as Set-Retarders of Class G Oilwell Cement », Cem. Concr. Res. 21 (1991) 663-668
[4] A. Joisel, « Les Adjuvants du Ciment », édité par l'auteur, Ecole Polytechnique, Paris (1973)
[5] J.M. Casabonne Masonnave, « Immobilization of Borates and Phosphates Anions with Saturated Lime Solutions », Solid State Ionics 59 (1993) 133-139
[6] I.S. Bell, P. Coveney, « Molecular Modelling of the Mechanism of Action of Borate Retarders on Hydrating Cements at High Temperature », Molecular Simulation 20 (1998) 331-356
[7] A. Saas, P. Vaunois, « Enrobage de Déchets dans les Liants Hydrauliques », Rapport Technique CEA/DRDD n°85/84 (1985)
[8] E. Benavides, « Immobilization of Evaporator Concentrates with High Boron Content in Cement Matrix », SIEN'97, International Symposium on Nuclear Energy Radioactive Waste Management, Bucarest 2 (1997) 470-471
[9] A. Palomo, J.I. Lopez de la Fuente, « Alkali-Activated Cementitious Materials : Alternative Matrices for the Immobilization of Hazardous Wastes Part I Stabilisation of Boron », Cem. Concr. Res. 33 (2003) 281-288
[10] R. Wenda, H.J. Kuzel, Proc. 8th International Congress on the Chemistry of Cement, Rio de Janeiro 3 (1983) 37-38
[11] H. Poellmann, S. Auer, H.J. Kuzel, « Solid Solution of Ettringites Part II Incorporation of B(OH)4- and CrO42- in 3CaO.Al2O3.3CaSO4.32H2O», Cem. Concr. Res. 23 (1993) 422-430
[12] S. Goni, A. Guerrero, « Stability of Calcium Aluminate Cement Matrices Mixed with Borate Solution », Proc. Intern. Conf. On Calcium Aluminate Cements CAC, ISBN 1-86125-142-4 (2001) 425-435
[13] Spécification Technique ANDRA n° ACO SP ASRE 99-004/A
[14] Spécification Technique ANDRA n° ACO SP ASRE 99-005/A
[15] J. Pera, J. Ambroise, M. Chabannet, Valorization of Automotive Shredder Residue in Building Materials, Cem. Concr. Res. 34 (2004) 557-562
[16] S. Peysson, J. Pera, M. Chabannet, Immobilization of Heavy Metals by Calcium Sulfoaluminate Cement, dans Cem. Concr. Res. (2005), 2261-2270
[17] B. Classen, B. Le Rolland, P. Colombet, Procédé d'Inertage de Déchets par Enrobage dans un Liant Hydraulique et Premix pour la Mise en OEuvre de ce Procédé, Brevet d'invention FR 2 796 934 A1 (1999), EP-A1-1072567 A1
[18] G. Li, H. Hornain, J. Couturier, Liant Hydraulique Résultant du Mélange d'un Liant Sulfatique et d'un Liant Comprenant le Composé Minéralogique C4A3S, Brevet FR-A1-2807424 (2001)

## Revendications

1. Procédé d'enrobage par cimentation d'une solution aqueuse contenant du bore dans lequel on malaxe la solution aqueuse contenant du bore avec une composition à base de ciment constituée par un ciment sulfoalumineux comprenant éventuellement du gypse, et par un sable, dans lequel pour cent parties de ciment en masse, la proportion de solution aqueuse contenant du bore est de 60 à 70 parties, et celle de sable est de 50 à 125 parties, et dans lequel la solution aqueuse contient de 10 à 50 g/L de bore, et de préférence de 20 à 40 g/L de bore.

2. Procédé selon la revendication 1, dans laquelle la phase majoritaire du clinker du ciment sulfoalumineux est la yeelimite.

3. Procédé selon l'une quelconque des revendications précédentes, dans laquelle le clinker constitutif du ciment sulfoalumineux a la composition minéralogique suivantes : 72,8% de C₄A₃S ; 13,4% de C₂S ; 8,0% de C₃FT ; 3,1% de C₁₂A₇ ; 1,7% de MgO et 0,7% de CS.

4. Procédé selon l'une quelconque des revendications précédentes, dans laquelle le ciment sulfoalumineux contient de 0 à 30% en poids de gypse, de préférence de 5 à 20% de gypse.

5. Procédé selon l'une quelconque des revendications précédentes, dans laquelle le sable est un sable non alcali-réactif.

6. Procédé selon l'une quelconque des revendications précédentes, dans laquelle le sable est un sable siliceux de Fontainebleau.

7. Procédé selon l'une quelconque des revendications précédentes, dans laquelle le sable a une granulométrie de 0 à 1 mm, de préférence de 0 à 350 *µ*m.

8. Procédé selon l'une quelconque des revendications précédentes, dans lequel on réalise les étapes successives suivantes :
- on malaxe la composition à base de ciment avec la solution aqueuse contenant du bore pour obtenir un coulis cimentaire constituant un enrobé ;
- on coule ledit enrobé dans un conteneur ;
- on laisse s'effectuer la prise dudit enrobé dans le conteneur ;
- on ferme ledit conteneur.

9. Procédé selon l'une quelconque des revendications précédentes, dans lequel le bore est présent sous la forme d'acide borique, et/ou d'ions borate et/ou d'ions polyboriques.

10. Procédé selon l'une quelconque des revendications précédentes, dans lequel la solution est une solution radioactive.

11. Procédé selon l'une quelconque des revendications précédentes, dans lequel la solution aqueuse contenant du bore est une solution issue de la purge du circuit primaire de refroidissement d'un réacteur nucléaire à eau pressurisée.

12. Procédé selon l'une quelconque des revendications précédentes, dans lequel préalablement au malaxage, le pH de la solution aqueuse contenant du bore est ajusté à une valeur supérieure ou égale à 11, de préférence comprise entre 11 et 12, par exemple de 11,5 ou 11,75.

13. Procédé selon l'une quelconque des revendications précédentes, dans lequel la température de la solution aqueuse contenant du bore est de 10 à 80°C, de préférence de 20 à 60°C.

14. Composition de coulis cimentaire pour l'enrobage d'une solution aqueuse contenant du bore constituée par la composition à base de ciment telle que définie dans l'une quelconque des revendications 1 à 7 et par une solution aqueuse contenant du bore, dans laquelle pour cent parties de ciment en masse, la proportion de solution aqueuse contenant du bore est de 60 à 70 parties, et celle de sable est de 50 à 125 parties, et dans laquelle la solution aqueuse contient de 10 à 50 g/L de bore, et de préférence de 20 à 40 g/L de bore.

15. Composition selon la revendication 14, dans laquelle le bore est présent sous la forme d'acide borique, et/ou d'ions borate et/ou d'ions polyboriques.

16. Composition selon l'une quelconque des revendications 14 et 15, dans laquelle la solution est une solution radioactive.

17. Composition selon la revendication 16, dans laquelle la solution aqueuse contenant du bore est une solution issue de la purge du circuit primaire de refroidissement d'un réacteur nucléaire à eau pressurisée.

18. Composition selon l'une quelconque des revendications 14 à 17, dans laquelle le taux d'incorporation massique de la solution aqueuse dans le coulis cimentaire est de 21,8% à 30,5%.

## Patentansprüche

1. Verfahren zur Einschließung einer borhaltigen, wässrigen Lösung durch Zementierung, bei dem die borhaltige, wässrige Lösung mit einer Zusammensetzung auf Zementbasis vermischt wird, die aus einem Sulfo-Aluminatzement, der gegebenenfalls Gips enthält, und aus einem Sand besteht, wobei für hundert Massenteile Zement der Anteil der borhaltigen, wässrigen Lösung 60 bis 70 Teile und der von Sand 50 bis 125 Teile beträgt, und wobei die wässrige Lösung 10 bis 50 g/L Bor und vorzugsweise 20 bis 40 g/L Bor enthält.

2. Verfahren nach Anspruch 1, wobei die Hauptphase des Sulfoaluminat-Zementklinkers Yeelimit ist.

3. Verfahren nach einem der vorangehenden Ansprüche, wobei der der aus Sulfo-Aluminatzement bestehende Klinker die nachfolgende mineralogische Zusammensetzung hat: 72,8 % C₄A₃S; 13,4 % C₂S; 8,0 % C₃FT; 3,1 % C₁₂A₇; 1,7 % MgO und 0,7 % CS.

4. Verfahren nach einem der vorangehenden Ansprüche, wobei der Sulfo-Aluminatzement 0 bis 30 Gew.-% Gips, vorzugsweise 5 bis 20 % Gips, enthält.

5. Verfahren nach einem der vorangehenden Ansprüche, wobei der Sand ein nicht alkali-reaktiver Sand ist.

6. Verfahren nach einem der vorangehenden Ansprüche, wobei der Sand ein Fontainebleau-Quarzsand ist.

7. Verfahren nach einem der vorangehenden Ansprüche, wobei der Sand eine Korngröße von 0 bis 1 mm, vorzugsweise von 0 bis 350 µm, hat.

8. Verfahren nach einem der vorangehenden Ansprüche, wobei die nachstehenden, aufeinanderfolgenden Schritte erfolgen:
- Vermischen der Zusammensetzung auf Zementbasis mit der borhaltigen, wässrigen Lösung, um eine ein Mischgut bildende Zementschlämme zu erhalten;
- Einleiten des Mischguts in einen Behälter;
- Abbinden lassen des Mischguts in dem Behälter;
- Verschließen des Behälters.

9. Verfahren nach einem der vorangehenden Ansprüche, wobei das Bor in Form von Borsäure und/oder Borat-Ionen und/oder Polybor-Ionen vorhanden ist.

10. Verfahren nach einem der vorangehenden Ansprüche, wobei die Lösung eine radioaktive Lösung ist.

11. Verfahren nach einem der vorangehenden Ansprüche, wobei die borhaltige, wässrige Lösung eine Lösung aus dem Ablassen des primären Kühlkreislaufs eines Druckwasserkernreaktors ist.

12. Verfahren nach einem der vorangehenden Ansprüche, wobei vor dem Vermischen der pH-Wert der borhaltigen, wässrigen Lösung auf einen Wert höher oder gleich 11, vorzugsweise zwischen 11 und 12, beispielsweise von 11,5 oder 11,75, eingestellt wird.

13. Verfahren nach einem der vorangehenden Ansprüche, wobei die Temperatur der borhaltigen, wässrigen Lösung 10 bis 80 °C, vorzugsweise 20 bis 60 °C, beträgt.

14. Zusammensetzung einer Zementschlämme zur Einschließung einer borhaltigen, wässrigen Lösung, die aus der Zusammensetzung auf Zementbasis, wie in einem der Ansprüche 1 bis 7 definiert ist, und aus einer borhaltigen, wässrigen Lösung besteht, wobei für hundert Massenteile Zement der Anteil der borhaltigen, wässrigen Lösung 60 bis 70 Teile und der von Sand 50 bis 125 Teile beträgt, und wobei die wässrige Lösung 10 bis 50 g/L Bor und vorzugsweise 20 bis 40 g/L Bor enthält.

15. Zusammensetzung nach Anspruch 14, wobei das Bor in Form von Borsäure und/oder Borat-Ionen und/oder Polybor-Ionen vorliegt.

16. Zusammensetzung nach einem der Ansprüche 14 und 15, wobei die Lösung eine radioaktive Lösung ist.

17. Zusammensetzung nach Anspruch 16, wobei die borhaltige, wässrige Lösung eine Lösung aus dem Ablassen des primären Kühlkreislaufs eines Druckwasserkernreaktors ist.

18. Zusammensetzung nach einem der Ansprüche 14 bis 17, wobei der Massenanteil der Einbringung der wässrigen Lösung in die Zementschlämme 21,8 % bis 30,5 % beträgt.

## Claims

1. Process for embedding, by cementation, a boron-containing aqueous solution wherein the boron-containing aqueous solution is kneaded with a cement-based composition consisting of a sulphoaluminate cement optionally comprising gypsum, and of a sand, wherein per one hundred parts of cement by weight, the proportion of boron-containing aqueous solution is from 60 to 70 parts, and that of sand is from 50 to 125 parts, and wherein the aqueous solution contains from 10 to 50 g/l of boron, and preferably from 20 to 40 g/l of boron.

2. Process according to Claim 1, wherein the predominant phase of the clinker of the sulphoaluminate cement is yeelimite.

3. Process according to any one of the preceding claims, wherein the constituent clinker of the sulphoaluminate cement has the following mineralogical composition: 72.8% of C₄A₃S; 13.4% of C₂S; 8.0% of C₃FT; 3.1% of C₁₂A₇; 1.7% of MgO and 0.7% of CS.

4. Process according to any one of the preceding claims, wherein the sulphoaluminate cement comprises from 0 to 30% by weight of gypsum, preferably from 5 to 20% of gypsum.

5. Process according to any one of the preceding claims, wherein the sand is a non-alkali-reactive sand.

6. Process according to any one of the preceding claims, wherein the sand is a Fontainebleau siliceous sand.

7. Process according to any one of the preceding claims, wherein the sand has a particle size of 0 to 1 mm, preferably of 0 to 350 µm.

8. Process according to any one of the preceding claims, wherein the following successive steps are carried out:
- the cement-based composition is kneaded with the boron-containing aqueous solution in order to obtain a cement grout constituting a mix;
- said mix is cast into a container;
- the setting of said mix is allowed to take place in the container;
- said container is closed.

9. Process according to any one of the preceding claims, wherein the boron is present in the form of boric acid, and/or of borate ions and/or of polyboric ions.

10. Process according to any one of the preceding claims, wherein the solution is a radioactive solution.

11. Process according to any one of the preceding claims, wherein the boron-containing aqueous solution is a solution resulting from the draining of the primary cooling circuit of a pressurized water nuclear reactor.

12. Process according to any one of the preceding claims, wherein, prior to the kneading, the pH of the boron-containing aqueous solution is adjusted to a value of greater than or equal to 11, preferably of between 11 and 12, for example 11.5 or 11.75.

13. Process according to any one of the preceding claims, wherein the temperature of the boron-containing aqueous solution is from 10 to 80°C, preferably from 20 to 60°C.

14. Cement grout composition for the embedding of a boron-containing aqueous solution consisting of the cement-based composition as defined in any one of Claims 1 to 7 and of a boron-containing aqueous solution, wherein per one hundred parts of cement by weight, the proportion of boron-containing aqueous solution is from 60 to 70 parts, and that of sand is from 50 to 125 parts, and wherein the aqueous solution contains from 10 to 50 g/l of boron, and preferably from 20 to 40 g/l of boron.

15. Composition according to claim 14, wherein the boron is present in the form of boric acid, and/or of borate ions and/or of polyboric ions.

16. Composition according to any one of claims 14 and 15, wherein the solution is a radioactive solution.

17. Composition according to Claim 16, wherein the boron-containing aqueous solution is a solution resulting from the draining of the primary cooling circuit of a pressurized water nuclear reactor.

18. Composition according to any one of claims 14 to 17, wherein the incorporation rate by weight of the aqueous solution in the cement grout is from 21.8% to 30.5%.
